(19) 

Europäisches
Patentamt
European
Patent Office
Office européen
des brevets

(11)  **EP 2 543 634 A1**

(12) **EUROPEAN PATENT APPLICATION**
published in accordance with Art. 153(4) EPC

(43) Date of publication:
 **09.01.2013  Bulletin 2013/02**

(21) Application number: **11836454.6**

(22) Date of filing: **28.10.2011**

(51) Int Cl.:
 **C01B 31/02** *(2006.01)*

(86) International application number:
 **PCT/JP2011/074944**

(87) International publication number:
 **WO 2012/057321 (03.05.2012 Gazette 2012/18)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**

(30) Priority: **14.07.2011  JP 2011155939
 31.05.2011  JP 2011121497
 30.03.2011  JP 2011074643
 29.10.2010  JP 2010243737**

(71) Applicant: **Toray Industries, Inc.
 Tokyo 103-8666 (JP)**

(72) Inventors:
 • **OI, Takashi**
  Otsu-shi,
  **Shiga 520-8558 (JP)**

• **WATANABE, Osamu**
 Otsu-shi,
 **Shiga 520-8558 (JP)**
• **HONDO, Kazunori**
 Otsu-shi,
 **Shiga 520-8558 (JP)**
• **NISHINO, Hidekazu**
 Otsu-shi,
 **Shiga 520-8558 (JP)**
• **SATO, Kenichi**
 Otsu-shi,
 **Shiga 520-8558 (JP)**

(74) Representative: **Hager, Thomas Johannes et al
 Hoefer & Partner
 Patentanwälte
 Pilgersheimer Strasse 20
 81543 München (DE)**

(54) **TRANSPARENT ELECTRICALLY CONDUCTIVE LAMINATE AND PROCESS FOR PRODUCTION THEREOF**

(57) The present invention provides a transparent conductive laminate comprising a conductive layer containing a carbon nanotube on a transparent substrate, which is characterized in that at least one of the following conditions [A] to [C] is satisfied and the ratio of the surface resistance after subjecting the transparent conductive laminate to a 1-hour moist-heat treatment at a temperature of 60°C and a relative humidity of 90% and then leaving the resultant to stand for 3 minutes at a temperature of 25°C and a relative humidity of 50% is 0.7 to 1.3 with respect to the surface resistance prior to the treatment: [A] the surface resistance at a white reflectance of 75% is not higher than $1.1 \times 10^3$ $\Omega/\square$; [B] the surface resistance at a light absorptivity of a carbon nanotube layer of 5% is not higher than $1.1 \times 10^3$ $\Omega/\square$; and [C] the surface resistance at a total light transmittance of 90% is not higher than $1.1 \times 10^3$ $\Omega/\square$. By the present invention, a transparent conductive laminate comprising a carbon nanotube as a conductive layer, which has high transparent conductivity and excellent resistance stability, can be provided.

EP 2 543 634 A1

**Description**

TECHNICAL FIELD

The present invention relates to a transparent conductive laminate. More particularly, the present invention relates to a transparent conductive laminate having excellent transparent conductivity, heat resistance stability and moist-heat resistance stability; and a production method thereof. Here, in the present invention, the term "transparent conductive laminate" refers to one in which, on a transparent substrate, at least one layer of a material different from the substrate is laminated by a wet coating method, a dry coating method or the like.

BACKGROUND ART

Carbon nanotubes have a substantially cylindrical shape obtained by winding one sheet of graphite. Carbon nanotubes obtained by winding one sheet of graphite in a single layer are referred to as "single-walled carbon nanotubes" and those which are obtained by winding one sheet of graphite in multiple layers are referred to as "multi-walled carbon nanotubes". Among multi-walled carbon nanotubes, in particular, ones which are obtained by winding one sheet of graphite in two layers are referred to as "double-walled carbon nanotubes". Carbon nanotubes have themselves excellent true conductivity and are, therefore, expected to be used as conductive materials.

In order to prepare a transparent conductive laminate comprising a carbon nanotube, a carbon nanotube is required to be dispersed in a dispersion liquid and generally, an ionic dispersant having excellent dispersibility is used therefor.

However, an ionic dispersant is generally an insulative substance and reduces the conductivity of the resulting carbon nanotube transparent conductive laminate. In addition, since an ionic dispersant has an ionic functional group, there is a problem that it is easily affected by environmental changes such as high temperature and high humidity and thus has poor resistance stability. Therefore, in order to prepare a transparent conductive laminate having high transparent conductivity and excellent resistance stability, it is believed necessary to remove such ionic dispersant from carbon nanotube layer.

PRIOR ART DOCUMENTS

PATENT DOCUMENTS

For example, Patent Document 1 discloses a method of producing a conductive film having high conductivity by coating a film with a carbon nanotube dispersion liquid and then rinsing the resultant with water to remove excess ionic dispersant.

Further, in Patent Document 2, there is disclosed an example where, in order to stabilize the resistance of a carbon nanotube transparent conductive laminate, an undercoat layer composed of a melamine resin is formed underneath a carbon nanotube layer, thereby improving the resistance stability.

Further, in Patent Document 3, there is disclosed an example where, in a transparent conductive laminate comprising indium tin oxide (ITO) as an electric conductor, in order to improve the adhesion between a polymer substrate and an ITO layer which is an inorganic oxide, nitride or oxide of silicon or aluminum is provided as an undercoat layer between the polymer substrate and the ITO layer.

    Patent Document 1: JP 2009-149516A
    Patent Document 2: WO2009/107758
    Patent Document 3: JP 2010-5817A

SUMMARY OF THE INVENTION

PROBLEMS TO BE SOLVED BY THE INVENTION

However, in Patent Document 1, there is no disclosure with regard to heat resistance stability and moist-heat resistance stability. In addition, the step of rinsing with water imposes high environmental stress; therefore, it may present a significant hurdle for mass-production property and stabilization of mass production.

In the technology disclosed in Patent Document 2, a melamine resin is employed as an undercoat layer; however, the heat resistance stability is not sufficient.

The ITO constituting the conductive layer is an inorganic substance whose properties are not impaired in the temperature and humidity ranges which a macromolecule, the substrate, can withstand and there is also no disclosure with regard to heat resistance stability and moist-heat resistance stability.

The present invention was made in view of the above-described problems and circumstances and an object of the present invention is to provide a transparent conductive laminate having excellent heat resistance stability and moist-heat resistance stability as well as excellent transparent conductivity.

MEANS FOR SOLVING THE PROBLEMS

In order to solve the above-described problems, the transparent conductive laminate according to the present invention has the following constitution. That is, the transparent conductive laminate according to the present invention is:

a transparent conductive laminate, which comprises a conductive layer containing a carbon nanotube on a transparent substrate, wherein at least one of the following conditions [A] to [C] is satisfied and the ratio of the surface resistance after subjecting the transparent conductive laminate to a 1-hour moist-heat treatment at a temperature of 60°C and a relative humidity of 90% and then leaving the resultant to stand for 3 minutes at a temperature of 25°C and a relative humidity of 50% is 0.7 to 1.3 with respect to the surface resistance prior to said treatment:

[A] the surface resistance at a white reflectance of 75% is $1.1 \times 10^3 \; \Omega/\square$ or less;
[B] the surface resistance at a light absorptivity of a carbon nanotube layer of 5% is $1.1 \times 10^3 \; \Omega/\square$ or less; and
[C] the surface resistance at a total light transmittance of 90% is $1.1 \times 10^3 \; \Omega/\square$ or less.

Further, the method of producing a transparent conductive laminate according to the present invention has the following constitution. That is, the method of producing a transparent conductive laminate according to the present invention is:

a method of producing a transparent conductive laminate, which comprises the steps of: fonning an undercoat layer on a transparent substrate, wherein a water contact angle of said undercoat layer is of 5 to 25°; coating a carbon nanotube dispersion liquid containing a dispersant on the undercoat layer; and drying the resultant to remove a dispersion medium from the above-described carbon nanotube dispersion liquid coated on the undercoat layer.

The electric paper according to the present invention has the following constitution. That is, the electric paper according to the present invention is:

an electric paper comprising the above-described transparent conductive laminate.

The touch screen according to the present invention has the following constitution. That is, the touch screen according to the present invention is:

a touch screen comprising the above-described transparent conductive laminate.

In the transparent conductive laminate according to the present invention, it is preferred that the ratio of the surface resistance after subjecting the transparent conductive laminate to a 1-hour heat treatment at a temperature of 150°C and then leaving the resultant to stand for 24 hours at a temperature of 25°C and a relative humidity of 50% be 0.7 to 1.3 with respect to the surface resistance prior to the treatment.

In the transparent conductive laminate according to the present invention, it is preferred that the ratio of the surface resistance after subjecting the transparent conductive laminate to a 500-hour heat treatment at a temperature of 80°C and then leaving the resultant to stand for 3 minutes at a temperature of 25°C and a relative humidity of 50% be 0.7 to 1.3 with respect to the surface resistance prior to the treatment.

In the transparent conductive laminate according to the present invention, it is preferred that an undercoat layer containing an inorganic oxide be arranged underneath the above-described conductive layer.

In the transparent conductive laminate according to the present invention, it is preferred that the above-described inorganic oxide contain alumina and/or silica as a main component(s).

In the transparent conductive laminate according to the present invention, it is preferred that the above-described undercoat layer contain a complex of a silica microparticle and a polysilicate as a main component.

In the transparent conductive laminate according to the present invention, it is preferred that the above-described silica microparticle have a diameter in the range of 10 nm to 200 nm.

In the method of producing a transparent conductive laminate according to the present invention, it is preferred that the above-described carbon nanotube dispersion liquid have a pH in the range of 5.5 to 11.

In the method of producing a transparent conductive laminate according to the present invention, it is preferred that, in the above-described coating step and/or drying step, the dispersant be transferred from the carbon nanotube surface and/or the carbon nanotube dispersion liquid to the above-described undercoat layer.

In the method of producing a transparent conductive laminate according to the present invention, it is preferred that the mass ratio of the dispersant be 0.5 to 9 with respect to the carbon nanotube contained in the above-described carbon nanotube dispersion liquid.

EFFECTS OF THE INVENTION

According to the present invention, since a carbon nanotube can be coated on a transparent substrate in a highly dispersed condition without being aggregated, a transparent conductive laminate having high transparent conductivity can be obtained. Also, since a dispersant, which is an insulative material, is transferred from a carbon nanotube layer onto an undercoat layer, a transparent conductive laminate having excellent transparent conductivity, heat resistance stability and moist-heat resistance stability can be obtained.

That is, high initial transparent conductivity as well as heat resistance and moist-heat resistance stabilities, which are conventionally not easily attained at the same time, can be realized by a process imposing low enviromnental stress.

BRIEF DESCRIPTION OF THE DRAWINGS

[Fig. 1] Fig. 1 is a drawing which illustrates a corona treatment method which may be used in the present invention.
[Fig. 2] Fig. 2 is a drawing which illustrates a method of measuring the white reflectance.
[Fig. 3] Fig. 3 is one example of an image showing the surface of an undercoat layer in the present invention, which was taken under an atomic force microscope (hereinafter, referred to as "AFM").
[Fig. 4] Fig. 4 is a drawing which illustrates an alumina vapor deposition method used in the present invention.
[Fig. 5] Fig. 5 is a schematic diagram showing a chemical vapor deposition apparatus used in the present invention.
[Fig. 6] Fig. 6 is a drawing which illustrates the results of photoelectron spectrometry in the present invention.
[Fig. 7] Fig. 7 a reference drawing of the results of photoelectron spectrometry, showing the structural formula of carboxymethyl cellulose.

MODE FOR CARRYING OUT THE INVENTION

The method of producing a transparent conductive laminate according to the present invention comprises the steps of: forming an undercoat layer on a transparent substrate, which undercoat layer has a water contact angle of 5 to 25°; coating a carbon nanotube dispersion liquid containing a dispersant (hereinafter, may be simply referred to as "dispersion liquid") on the undercoat layer; and drying the resultant to remove a dispersion medium from the above-described carbon nanotube dispersion liquid containing a dispersant.

In the step of forming an undercoat layer, dry coating or wet coating can be adopted. It is preferred that the resulting undercoat layer have a thickness of 1 to 500 nm.

In the coating step, in order to form a carbon nanotube layer on the undercoat layer, a carbon nanotube dispersion liquid containing a dispersant is provided by wet coating. The carbon nanotube dispersion liquid used here is a mixture of a carbon nanotube, a dispersant and a dispersion medium, which is water, and it is preferred that the dispersant be contained at a mass ratio of 0.5 to 9 with respect to the carbon nanotube. It is preferred that this dispersion liquid be coated on the undercoat layer such that the amount of the carbon nanotube after drying becomes 1 to 40 mg/m$^2$.

Examples of the step of drying to remove a dispersion medium from the coated carbon nanotube dispersion liquid, which is performed after the coating step, include convective hot-air drying in which hot air is blown to a substrate; radiation electrothermal drying in which a substrate is allowed to absorb infrared radiation irradiated from an infrared dryer and the thus absorbed infrared radiation is converted to heat so as to dry the substrate by the heat; and conductive electrothermal drying in which drying is performed by thermal conduction from a wall surface heated by a heating medium. Thereamong, convective hot-air drying is preferred since the drying rate is high.

Further, in the present invention, it is preferred that the dispersant be transferred to the above-described undercoat layer in the above-described coating step and/or drying step.

Generally, in a carbon nanotube dispersion liquid, due to high $\pi$-electron interaction working between the side walls of carbon nanotubes, the carbon nanotubes are likely to aggregate into a bundle state. By applying a dispersion liquid in which this bundle state is resolved and carbon nanotubes are separated from one another and dispersed, the conductivity of the resulting carbon nanotube layer is expected to be improved. Further, the longer the carbon nanotubes, the more the number of contact points among the carbon nanotubes is increased, so that the conductivity of the resulting carbon nanotube layer is improved. However, in a transparent conductive laminate prepared by coating and then drying a carbon nanotube dispersion liquid on a transparent substrate, while an increased amount of dispersant in the dispersion liquid contributes to an improvement in the conductivity by resolving the above-described bundle state and preventing carbon nanotubes from breaking at the time of their dispersion, there is a problem that these effects are cancelled as the use of such dispersion liquid leads to an increase in the ratio of the dispersant, an insulative material, in the resulting carbon layer, adversely affecting the conductivity. Furthermore, an increase in the amount of dispersant contained in the carbon nanotube layer also has a problem in that the resistance stability of the resulting transparent conductive laminate is deteriorated when it is heat-treated or placed in a high-temperature and high-humidity condition. In a preferred mode of the present invention, the amount of dispersant in the dispersion liquid is increased to have carbon nanotubes in a highly dispersed state and inhibit their breakage and, in the step of coating and/or drying the carbon nanotube dispersion liquid on a hydrophilic undercoat layer, the dispersant is transferred to the undercoat layer, thereby the amount of the dispersant in the resulting carbon nanotube layer can be reduced and a transparent conductive laminate having superior transparent conductivity and resistance stability as compared to before can be obtained.

[Transparent substrate]

Examples of the material of the transparent substrate used in the present invention include resins and glasses. As the resin, for example, a polyester such as polyethylene terephthalate (PET) or polyethylene naphthalate (PEN), a polycarbonate (PC), a polymethyl methacrylate (PMMA), a polyimide, a polyphenylene sulfide, an aramids, a polypropylene, a polyethylene, a polylactic acid, a polyvinyl chloride, a polymethyl methacrylate, an alicyclic acrylic resin, a cycloolefin resin or a triacetylcellulose may be employed. As the glass, an ordinary soda glass may be employed. Further, a plurality of these transparent substrates may be used in combination as well. For example, the transparent substrate may be one which is composed of a combination of a resin and a glass or a complex transparent substrate such as one obtained by laminating two or more resins. The transparent substrate may also be one in which a hardcoat is arranged on a resin film. The type of the transparent substrate is not restricted to those described in the above and the most appropriate one can be selected in accordance with the intended use as well as from the standpoints of the durability, cost and the like. The thickness of the transparent substrate is not particularly restricted; however, in cases where it is used in an electrode related to a display such as a touch screen, a liquid crystal display, an organic electroluminescence or an electric paper, the thickness of the transparent substrate is preferably in the range of 10 $\mu$m to 1,000 $\mu$m.

[Undercoat layer]

In the present invention, an undercoat layer is provided on the above-described transparent substrate. It is preferred that the material of the undercoat layer be one having high hydrophilicity. Specifically, a material having a water contact angle in the range of 5 to 25° is preferred. More specifically, an inorganic oxide is preferably employed. More preferably, the material is titania, alumina or silica. These substances are preferred because they have a hydrophilic group-OH group on the surface and high hydrophilicity can be thus attained. Further, it is more preferred that the undercoat layer contain a complex of a silica microparticle and a polysilicate as a main component.

Further, it is more preferred that irregularities be formed on the surface of the undercoat layer. By forming irregularities, in the coating step and/or the drying step, the area of the undercoat layer to which the dispersant can be transferred is increased and the amount of the dispersant transferred can be thus increased. As a result, the transparent conductivity and the resistance stability of the transparent conductive laminate can be further improved. In order to easily form irregularities of a desired range, it is preferred that the inorganic oxide microparticles to be contained in the undercoat layer have a diameter in the range of 10 to 200 nm.

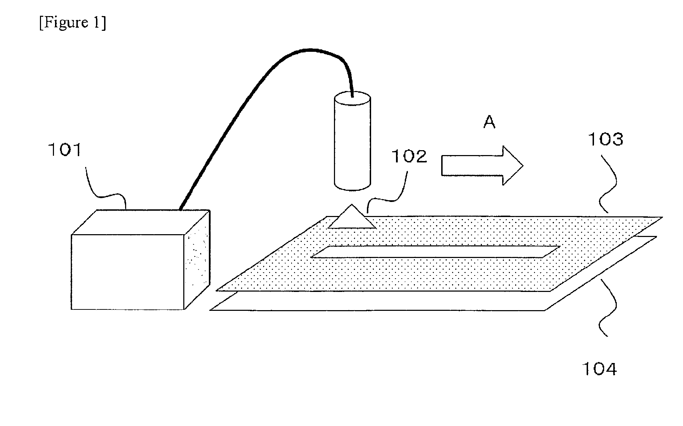

In addition, in order to further hydrophilize the undercoat layer, the above-described hydrophilic functional group may be expressed by performing a surface hydrophilization treatment. Examples of hydrophilization method include physical treatments such as corona treatment, plasma treatment and flame treatment; and chemical treatments such as acid treatment and alkali treatment. Thereamong, corona treatment and plasma treatment are preferred. A corona treatment can be performed by using, for example, such an apparatus shown in Fig. 1. Such corona treatment can be performed as follows. Using a high-voltage application device 101, a DC voltage of 10 to 100 kV is generated between ground (not shown) and an electrode 102. Then, after separating the electrode 102 and a transparent substrate 104 by a distance of 50 to 200 $\mu$m, a partition wall 102 is arranged therebetween and the electrode is moved at a speed of 1 to 10 cm/sec in the direction of the arrow indicated as "A" in Fig. 1. By performing these operations, surface properties including a water contact angle in the above-described range can be attained.

[Method of Forming Undercoat Layer]

In the present invention, the method of forming an undercoat layer on a transparent substrate is not particularly restricted. A known wet coating method, for example, spray coating, immersion coating, spin coating, knife coating, kiss coating, gravure coating, slot-die coating, roll coating, bar coating, screen printing, ink-jet printing, pad printing or other type of printing method may be employed. Further, a dry coating method may be employed as well. As the dry coating method, for example, physical vapor growth, such as sputtering or vapor deposition, or chemical vapor deposition can be utilized. Further, the coating may be performed in plural times and two different coating methods may also be used in combination. As the coating method, gravure coating and bar coating, which are wet coating, are preferred.

[Adjustment of Undercoat Layer Thickness]

The thickness of the undercoat layer is not restricted as long as the dispersant can be transferred thereto at the time of coating the carbon nanotube dispersion liquid. Any thickness at which an anti-reflection effect by optical interference can be effectively attained is preferred since such a thickness allows an improvement in the light transmittance. Accordingly, it is preferred that the thickness of the undercoat layer be, combined with that of the later-described overcoat layer, in the range of 80 to 120 nm.

[Water Contact Angle of Undercoat Layer]

The water contact angle can be measured using a commercially available contact angle measuring apparatus. In the measurement of the water contact angle, in accordance with JIS R 3257 (1999), in an atmosphere having a room temperature of 25°C and a relative humidity of 50%, 1 to 4 $\mu$L of water is dropped onto the undercoat layer surface using a syringe and a droplet is observed from a horizontal cross-section to determine the angle created between a tangent line of the droplet edge and the film plane.

[Carbon Nanotube]

The carbon nanotube used in the present invention is not particularly restricted as long as it is one having a substantially cylindrical shape obtained by winding one sheet of graphite. Either of a single-walled carbon nanotube obtained by winding one sheet of graphite in single layer and a multi-walled carbon nanotube obtained by winding one sheet of graphite in multiple layers may be employed; however, preferred thereamong is particularly a carbon nanotube in which at least 50 out of 100 carbon nanotubes are double-walled carbon nanotubes obtained by winding one sheet of graphite in two layers since a such carbon nanotube has extremely high conductivity as well as extremely high dispersibility in a coating dispersion liquid. It is more preferred that at least 75 out of 100 carbon nanotubes be double-walled carbon nanotubes and it is most preferred that at least 80 out of 100 carbon nanotubes be double-walled carbon nanotubes. It is noted here that the condition where 50 out of 100 carbon nanotubes are double-walled carbon nanotubes may be indicated as "the ratio of double-walled carbon nanotube is 50%". Furthermore, a double-walled carbon nanotube is preferred also from the point that the intrinsic functions such as conductivity are not impaired even when the surface thereof is functionalized by an acid treatment or the like.

The carbon nanotube is produced by, for example, the following procedures. In a vertical reactor, a powder-form catalyst in which iron is supported on magnesia is provided on the entire surface of the reactor in the direction of horizontal cross-section of the reactor. Methane is then supplied to the reactor in the vertical direction so as to bring the thus supplied methane into contact with the above-described catalyst at a temperature of 500 to 1,200°C. After producing a carbon nanotube, the thus obtained carbon nanotube may be subjected to an oxidation treatment to obtain a carbon nanotube containing single-walled to 5-walled carbon nanotubes. After this production, the thus obtained carbon nanotube may be subjected to an oxidation treatment, thereby the ratio of the single-walled to 5-layered carbon nanotubes, particularly the ratio of the double-walled to 5-walled nanotubes, can be increased. This oxidation treatment is performed by using, for example, a nitric acid treatment method. Nitric acid is preferred since it acts as a dopant for carbon nanotubes. A dopant provides a carbon nanotube with excess electrons or functions to deprive electrons to form a hole. A dopant improves the conductivity of a carbon nanotube by generating a carrier capable of moving freely. The nitric acid treatment method is not particularly restricted as long as the carbon nanotube according to the present invention can be obtained; however, it is usually performed in an oil bath at 140°C. The duration of the nitric acid treatment is also not particularly restricted; however, it is preferably in the range of 5 hours to 50 hours.

[Dispersant]

As the dispersant of the carbon nanotube, for example, surfactants and variety of polymer materials (water-soluble polymer materials) may be employed; however, an ionic polymer material having high dispersibility is preferred. Examples of the ionic polymer material include anionic polymer materials, cationic polymer materials and amphoteric polymer materials. Any type of such ionic polymer material may be used as long as it has high carbon nanotube-dispersing capacity and is capable of retaining dispersion; however, anionic polymer materials are preferred since they have excellent dispersibility and dispersion-retaining property. Thereamong, carboxymethylcellulose and salts thereof (such as sodium salt and ammonium salt) and polystyrene sulfonic acid salts are preferred since they are capable of efficiently dispersing the carbon nanotube in a carbon nanotube dispersion liquid.

In the present invention, in cases where a carboxymethylcellulose salt or a polystyrene sulfonic acid salt is used, as the cationic substance constituting the salt, for example, a cation of an alkali metal such as lithium, sodium or potassium; a cation of an alkaline earth metal such as calcium, magnesium or barium; an ammonium ion; an onium ion of an organic amine such as monoethanolamine, diethanolamine, triethanolamine, morpholine, ethylamine, butylamine, coconut oil amine, tallow amine, ethylenediamine, hexamethylenediamine, diethylenetriamine or polyethyleneimine; or a polyethylene oxide adduct thereof can be used; however, the cationic substance constituting the salt is not restricted to these.

[Dispersion medium]

As the dispersion medium used in the present invention, from the viewpoints that, for example, the above-described dispersant can be safely dissolved and the resulting waste liquid is easily treated, water is preferred.

[Carbon Nanotube Dispersion Liquid]

The method of preparing the carbon nanotube dispersion liquid used in the present invention is not particularly restricted and the preparation can be performed by, for example, the following procedures.
Since the treatment time at the time of dispersion can be shortened, it is preferred to once prepare a dispersion liquid which contains the carbon nanotube in the concentration range of 0.003 to 0.15% by mass in the dispersion medium and then dilute the resultant to a prescribed concentration. In the present invention, the mass ratio of the dispersant is preferably not higher than 10 with respect to the carbon nanotube. In such preferred range, uniform dispersion is easily attained and there is no effect of impairing the conductivity. The mass ratio is more preferably 0.5 to 9, still more preferably 1 to 6. A mass ratio of 2 to 3 is particularly preferred since high transparent conductivity can be attained. Examples of a dispersion means used in the preparation of the dispersion liquid include mixing a carbon nanotube and a dispersant in a dispersion medium using a mixing/dispersion apparatus which is commonly used in the production of a coating (for example, a ball mill, a beads mill, a sand mill, a roll mill, a homogenizer, an ultrasonic homogenizer, a high-pressure homogenizer, an ultrasonic apparatus, an attritor, a desorber or a paint shaker). Further, dispersion may also be carried out stepwise by using a plurality of these mixing/dispersion apparatuses in combination. Thereamong, a method in which dispersion is carried out using an ultrasonic apparatus after performing preliminary dispersion using a vibration ball mil is preferred since the dispersibility of the carbon nanotube in the resulting dispersion liquid used for coating is favorable.

[Characteristics of Carbon Nanotube Dispersion Liquid]

It is preferred that the dispersion liquid used in the present invention have a pH in the range of 5.5 to 11.
When the pH of the carbon nanotube dispersion liquid is in the range of 5.5 to 11, the ionization degrees of acidic functional groups of, for example, carboxylic acid modifying the carbon nanotube surface and carboxylic acid contained in the dispersant surrounding the carbon nanotube are improved, so that the carbon nanotube or the dispersant therearound becomes negatively charged. In this manner, by allowing mutual electrostatic repulsion of the carbon nanotube or the dispersant therearound to occur, the dispersibility of the carbon nanotube can be further improved and the bundle diameter thereof can be made small. The pH is adjusted preferably in the step of mixing and dispersing the dispersant using the above-described mixing/dispersion apparatus; however, the same effects can also be attained by performing the adjustment after the dispersion step.
The pH of the carbon nanotube dispersion liquid can be adjusted by adding thereto an acidic substance or a basic substance in accordance with the Arrhenius Law. Examples of the acidic substance include, as protonic acids, inorganic acids such as hydrochloric acid, sulfuric acid, nitric acid, phosphoric acid, fluoroboric acid, hydrofluoric acid and perchloric acid; organic carboxylic acids; phenols; and organic sulfonic acids. Further, examples of the organic carboxylic acids include formic acid, acetic acid, nitric acid, benzoic acid, phthalic acid, maleic acid, fumaric acid, malonic acid, tartaric acid, citric acid, lactic acid, succinic acid, monochloroacetic acid, dichloroacetic acid, trichloroacetic acid, trifluoroacetic acid, nitroacetic acid and triphenylacetic acid. Examples of the organic sulfonic acids include alkylbenzenesulfonic acid, alkylnaphthalenesulfonic acid, alkylnaphthalenedisulfonic acid, naphthalenesulfonic acid-formalin polycondensate, melamine sulfonic acid-formalin polycondensate, naphthalenedisulfonic acid, naphthalenetrisulfonic acid, dinaphthylmethanedisulfonic acid, anthraquinonesulfonic acid, anthraquinonedisulfonic acid, anthracenesulfonic acid and pyrenesulfonic acid. Among these acidic substances, volatile acids that are vaporized at the time of coating and drying the dispersion liquid, such as hydrochloric acid and nitric acid, are preferred.
Examples of the basic substance include sodium hydroxide, potassium hydroxide, calcium hydroxide and ammonia. Thereamong, volatile bases that are vaporized at the time of coating and drying the dispersion liquid, such as ammonia, are preferred.

[pH Adjustment of Carbon Nanotube Dispersion Liquid]

The pH of the carbon nanotube dispersion liquid is adjusted by adding the above-described acidic substance and/or basic substance until a desired pH is attained while measuring the pH. Examples of the method of measuring the pH include a method in which a pH test paper such as litmus paper is used, a hydrogen electrode method, a quinhydrone electrode method, an antimony electrode method and a glass electrode method. Thereamong, a glass electrode method is preferred since it is simple and capable of providing the required accuracy. Further, in case where an acidic substance or a basic substance was added excessively and the pH became higher than a desired value, the pH can be adjusted by adding a substance having the opposite property. As the acidic substance and the basic substance to be used in such adjustment, nitric acid and ammonia are preferred, respectively.

[Formation of Carbon Nanotube Layer]

In the method of producing a transparent conductive laminate according to the present invention, a carbon nanotube layer is formed through the step of coating a carbon nanotube dispersion liquid on a transparent substrate and the subsequent step of drying the resultant to remove a dispersion medium.
In the coating step, it is believed that, when a dispersion liquid obtained by the above-described method is coated on a transparent substrate having the above-described undercoat layer formed thereon, a dispersant having a hydrophilic moiety is drawn to the surface of the undercoat layer having a hydrophilic group, so that the dispersant is adsorbed to the surface of the undercoat layer. Subsequently, a carbon nanotube layer is formed by drying the dispersion medium and fixing the carbon nanotube onto the undercoat layer. Here, it is believed that, due to the dispersion medium remaining on the undercoat layer, as long as the dispersant is in a condition where it is capable of moving from the carbon nanotube to the surface of the undercoat layer, the dispersant is drawn and adsorbed to the surface of the undercoat layer having a hydrophilic group in the same manner as in the coating step. In this manner, it is believed that the amount of the dispersant in the carbon nanotube layer is reduced by the adsorption of the dispersant to the undercoat layer having a hydrophilic group. Such adsorption of the dispersant to the undercoat layer is attained by using a hydrophilic undercoat layer having a water contact angle of 5° to 25°. Further, it is preferred that the carbon nanotube dispersion liquid be coated at a coating thickness in the range of 1 $\mu$m to 50 $\mu$m and that the time for the dispersion medium to be removed from the carbon nanotube layer by drying be in the range of 0.1 second to 100 seconds since the adsorption of the dispersant by such mechanism can be more effectively generated.
An example of the method for verifying this phenomenon is X-ray photoelectron spectrometry (XPS). In XPS, a substance is irradiated with X-ray to excite an electron in the atomic orbital and allow them to be released from the system as a photoelectron and the energy value thereof is measured.
This photoelectron energy value is represented by the following formula.
$$E = h\nu - E_B$$

(E: photoelectron energy value, hv: energy value of irradiated X-ray, $E_B$: electron binding energy)
The $E_B$ can be determined by irradiating X-ray having a certain energy value and measuring the energy value of the released photoelectron. Since the $E_B$ is an orbital energy peculiar to each element, the type of the element can be identified from this value. Further, even in the same element, the peak of the energy value shifts depending on its binding condition. Thus, by measuring this shift, the binding condition can also be determined.
In the present invention, the amount of the dispersant is determined semiquantitatively from peaks that are peculiar to the dispersant. For example, in carboxymethyl cellulose, carbon atoms having a binding condition of -COO, -OCO- or -CO- are present. By measuring these peaks and performing appropriate data processing, the amounts of dispersants can be compared. Further, the detection depth of XPS is dependent on the mean free path of the substance as well; however, by adjusting the photoelectron escape angle (tilt of the detector with respect to the sample surface), the detection depth can be controlled to roughly several nanometers or so. This value is almost the same as the estimated thickness of the carbon nanotube layer according to the present invention and can thus provide information on the carbon nanotube layer.
By determining the $E_B$ of the carbon atoms in the outermost surface of the carbon nanotube layer by XPS, it was able to verify that the amount of the dispersant in the carbon nanotube layer is smaller when an undercoat layer is present as compared to when no undercoat layer is present, so that it was supported that the dispersant transferred to the undercoat layer.

In the present invention, the method of coating the dispersion liquid on the transparent substrate is not particularly restricted. A known coating method, for example, spray coating, immersion coating, spin coating, knife coating, kiss coating, gravure coating, slot-die coating, bar coating, roll coating, screen printing, ink-jet printing, pad printing or other type of printing method may be employed. Further, the coating may be performed in plural times and two different coating methods may be used in combination as well. Gravure coating and bar coating are the most preferred coating methods.

[Thickness Adjustment of Carbon Nanotube Layer]

The coating thickness at which the carbon nanotube dispersion liquid is coated on the transparent substrate (thickness in wet condition) is also dependent on the concentration of the carbon nanotube dispersion liquid; therefore, the coating thickness can be adjusted as appropriate so that a desired surface resistance can be attained. In the present invention, the amount of carbon nanotube to be coated can be easily adjusted so as to achieve a variety of applications where conductivity is required. For example, as long as the coating amount is 1 mg/m$^2$ to 40 mg/m$^2$, the surface resistance can be attained at $1 \times 10^\circ$ to $1 \times 10^4$ Ω/□, which is preferred.

[Overcoat Layer]

In the present invention, after the formation of the carbon nanotube layer, an overcoat layer composed of a transparent coating film may be formed on the carbon nanotube layer. It is preferred that an overcoat layer be formed since the transparent conductivity, heat resistance stability and moist-heat resistance stability can be thereby further improved.

As the material of the overcoat layer, either of an organic material and an inorganic material can be used; however, from the standpoint of the resistance stability, an inorganic material is preferred. Examples of the inorganic material include metal oxides such as silica, tin oxide, alumina, zirconia and titania, and from the standpoint of the resistance stability, silica is preferred.

[Method of Forming Overcoat Layer]

In the present invention, the method of forming an overcoat on a carbon nanotube layer is not particularly restricted. A known wet coating method, for example, spray coating, immersion coating, spin coating, knife coating, kiss coating, roll coating, gravure coating, slot-die coating, bar coating, screen printing, ink-jet printing, pad printing or other type of printing method may be employed. Further, a dry coating method may be employed as well. As the dry coating method, for example, physical vapor growth, such as sputtering or vapor deposition, or chemical vapor deposition can be utilized. Further, the operation of providing an overcoat layer on a carbon nanotube layer may be performed in plural times and two different coating methods may also be used in combination. Gravure coating and bar coating, which are wet coating, are preferred methods.

In the method of forming a silica layer using wet coating, it is preferred to use an organic silane compound, and examples of such method include a method in which the above-described wet coating is performed using, as a coating solution, a solution which is prepared by dissolving a silica sol produced by hydrolyzation of an organic silane compound such as tetraalkoxysilane (e.g. tetramethoxysilane, tetraethoxysilane, tetra-n-propoxysilane, tetra-iso-propoxysilane or tetra-n-butoxysilane) in a solvent and at the time of drying the solvent, silanol groups are allowed to undergo dehydration condensation with each other to form a silica thin film.

The thickness of the overcoat layer is controlled by adjusting the concentration of the silica sol in the coating solution and the coating thickness at the time of coating. Any thickness at which an anti-reflection effect by optical interference can be effectively attained is preferred since such a thickness allows an improvement in the light transmittance. Accordingly, as described in the above, it is preferred that the thickness of the overcoat layer be, combined with that of the undercoat layer, in the range of 80 to 120 nm. Further, by increasing the thickness of the overcoat layer, scattering of a dopant improving the conductivity of the carbon nanotube, such as nitric acid, can be prevented and long-term heat resistance can be improved. The thickness of the overcoat layer effective in preventing this scattering of a dopant is not less than 40 nm. Further, considering the range of the total thickness of the undercoat layer and the overcoat layer for attaining the above-described anti-reflection effect, it is more preferred that the thickness of the overcoat layer be not less than 40 nm and not greater than 120 nm.

[Transparent Conductivity]

A transparent conductive laminate having excellent transparent conductivity can be obtained in the above-described manner. The term "transparent conductivity" means that transparency and conductivity are attained at the same time.

A representative index of the transparency is total light transmittance and examples of similar index include white reflectance and light absorptivity of the carbon nanotube layer (the white reflectance and light absorptivity of the carbon nanotube layer will be described layer). The total light transmittance is in the range of preferably 80% to 93%, more preferably 90% to 93%.

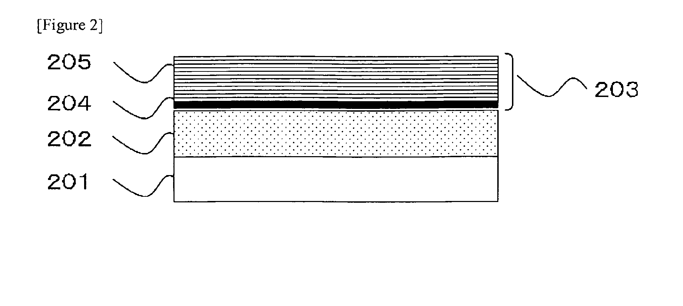

In the present invention, as an index of the transparency, in addition to the total light transmittance, the white reflectance or the light absorptivity of the carbon nanotube layer may also be used. The "white reflectance" in the present invention (hereinafter, indicated as "the white reflectance") represents a ratio of the reflected light to the incoming light when a white reflection plate 201, an adhesive layer 202 and a transparent conductive laminate 203 are laminated as shown in Fig. 2 and a light having a wavelength of 550 nm is irradiated from the side of the transparent conductive laminate. As long as the thickness of this adhesive layer and the refractive index are in the range of 20 $\mu$m to 40 $\mu$m and 1.4 to 1.6, respectively, the transparent conductive laminate is suitable for the measurement of the white reflectance prescribed in the present invention. The material of the adhesive is not particularly restricted as long as the thickness of the adhesive layer and the reflective index are in the above-described respective ranges. For example, materials such as acryls, urethanes, olefins, celluoses, ethylene-vinyl acetates, epoxy-based materials, vinyl chlorides, chloroprene rubbers, vinyl acetates, cyanoacrylates, silicones, phenol resins, polyimides, polystyrenes and melamines may be employed as appropriate.

In the present invention, examples of other index that can be used as the index of transparency include the light absorptivity of the carbon nanotube layer. The light absorptivity of the carbon nanotube layer at a wavelength of 500 nm is an index represented by the following formula.

Light absorptivity of carbon nanotube layer (%) = 100% - Light transmittance

(%) - Light reflectance of conductive surface (%) - Light reflectance of surface opposite to conductive surface (%)

As an index of conductivity, the surface resistance is used. The lower the surface resistance, the higher the conductivity. The surface resistance is in the range of preferably $1 \times 10^0$ to $1 \times 10^4$ $\Omega/\square$, more preferably $1 \times 10°$ to $1 \times 10^3$ $\Omega/\square$.

The conductivity (surface resistance) and the transparency (such as total light transmittance) can be adjusted by changing the coating amount of the carbon nanotube. However, when the coating amount of the carbon nanotube is small, the transparency is high while the conductivity is low, and when the coating amount is large, the transparency is low while the conductivity is high. That is, the conductivity and the transparency are in a trade-off relationship; therefore, it is difficult to satisfy both of these properties at the same time. Because of such relationship, in order to compare the transparent conductivity, it is required that either of these indices be fixed and the other index be compared. In the present invention, when comparing the transparent conductivity, the surface resistance under a certain transparency is used as an index.

That is, in cases where the total light transmittance is selected as an index of the transparency, the surface resistance at a total light transmittance of 90% is used as the index. In the transparent conductive laminate according to the present invention, the surface resistance at a total light transmittance of 90% is not higher than $1.1 \times 10^3$ $\Omega/\square$.

In the present invention, in cases where the white reflectance is selected as an index of the transparency, the surface resistance at a white reflectance of 75% is used as the index. In the transparent conductive laminate obtained by the present invention, the surface resistance at a white reflectance of 75% is not higher than $1.1 \times 10^3$ $\Omega/\square$.

In the present invention, in cases where the light absorptivity of the carbon nanotube layer is selected as an index of the transparency, the surface resistance at a light absorptivity of the carbon nanotube layer of 5% is used as the index. In the transparent electrically-conductivity laminate obtained by the present invention, the surface resistance at a light absorptivity of the carbon nanotube layer of 5% is not higher than $1.1 \times 10^3$ $\Omega/\square$.

As the above-described index of the transparency, the total light transmittance of a laminate comprising an overcoat layer, a carbon nanotube layer, an undercoat layer and a transparent substrate is practically meaningful. Accordingly, the index can be used when a relative comparison is performed with a laminate of a certain overcoat layer and undercoat layer. However, since the light reflectance of the conductive surface as well as the total light transmittance vary depending on the refractive indices of the overcoat layer and undercoat layer, in cases where carbon nanotube layers alone are compared, it is preferred to use the white reflectance or the light absorptivity thereof as an index.

[Moist-heat Resistance Stability]

By the method of producing a transparent conductive laminate according to the present invention, a transparent conductive laminate which satisfies the above-described conductivity and has excellent moist-heat resistance stability can be obtained. In the present invention, as an index of the moist-heat resistance stability, the ratio of the surface resistance after subjecting the transparent conductive laminate to a 1-hour moist-heat treatment at a temperature of 60°C and a relative humidity of 90% and then leaving the resultant to stand for 3 minutes at a temperature of 25°C and a relative humidity of 50% with respect to the surface resistance prior to the treatment is employed. In the transparent conductive laminate according to the present invention, this moist-heat resistance stability is 0.7 to 1.3, preferably 0.8 to 1.2.

[Heat Resistance Stability]

By a preferred method of producing a transparent conductive laminate according to the present invention, a transparent conductive laminate which also has excellent heat resistance stability can be obtained. In the present invention, as an index of the heat resistance stability, the ratio of the surface resistance after subjecting the transparent conductive laminate to a 1-hour heat treatment at a temperature of 150°C and then leaving the resultant to stand for 24 hours at a temperature of 25°C and a relative humidity of 50% with respect to the surface resistance prior to the treatment is employed. Here, the relatively humidity is not controlled in the heat treatment at 150°C; however, since the saturated water vapor pressure at 150°C is 4.8 atm and that at 25°C, which is normal temperature, is 0.03 atom, even if the relative humidity varied at normal temperature, when the temperature is increased to 150°C, the relative humidity can be regarded to be substantially 0. In transparent conductive laminate according to the present invention, the heat resistance stability is preferably 0.7 to 1.3, more preferably 0.8 to 1.2.

[Long-term Heat Resistance Stability]

By a more preferred method of producing a transparent conductive laminate according to the present invention, a transparent conductive laminate which also has excellent long-term heat resistance stability can be obtained. In the present invention, as an index of the long-term heat resistance stability, the ratio of the surface resistance after subjecting the transparent conductive laminate to a 500-hour heat treatment at a temperature of 80°C and then leaving the resultant to stand for 3 minutes at a temperature of 25°C and a relative humidity of 50% with respect to the surface resistance prior to the treatment is employed. Here, the relatively humidity is not controlled in the heat treatment at 80°C; however, since the saturated water vapor pressure at 80°C is 0.47 atm and that at 25°C, which is normal temperature, is 0.03 atom, even if the relative humidity varied at normal temperature, when the temperature is increased to 150°C, the relative humidity can be regarded to be substantially 0. In transparent conductive laminate according to the present invention, the long-term heat resistance stability is preferably 0.7 to 1.3, more preferably 0.8 to 1.2.

EXAMPLES

The present invention will now be described in more detail by way of examples thereof; however, the present invention is not restricted thereto. The measurement methods used in the examples are described below. Unless otherwise specified, the number of measurements, n, was 2 and an average thereof was used.

(1) Surface Resistance

A transparent conductive laminate was sampled in a size of 5 cm × 10 cm and a probe was brought into close contact with the central part of the carbon nanotube layer side of the thus sampled transparent conductive laminate to measure the resistance by a four-probe method at room temperature. A resistivity meter, model MCP-T360 manufactured by DIA Instruments Co., Ltd., was employed as the measuring apparatus and a four-point probe, MCP-TPO3P manufactured by DIA Instruments Co., Ltd., was employed as the probe.

(2) White Reflectance

Using "LUMIRROR" ES6R manufactured by Toray Industries, Inc. as a white reflection plate and "LUCIACS" CS9621T manufactured by Nitto Denko Corporation as an adhesive layer, they were laminated such that, as shown in Fig. 2, the conductive surface of the transparent conductive laminate was in contact with the adhesive layer. On the transparent conductive laminate side of the thus obtained laminate, the reflectance at a wavelength of 550 nm was measured using "CM-2500d" manufactured by Konica Minolta Sensing, Inc., and the thus obtained value was defined as white reflectance.

(3) Light Absorptivity of Carbon Nanotube Layer

(3-1) Reflectance of Conductive Surface and Reflectance of the Opposite Surface of Conductive Surface

The opposite surface of the measuring surface was roughened uniformly using a #320 to #400 waterproof sandpaper such that the 60°-gloss value (JIS Z 8741 (1997)) became not greater than 10. Then, the thus roughened surface was colored by applying thereto a black paint such that the visible light transmittance became 5% or less. Using a spectrophotometer "UV-3150" manufactured by Shimadzu Corporation, the reflectance of the conductive surface and that of the opposite surface of the conductive surface were measured at an incidence angle of 5° at the measuring surface and a wavelength of 550 nm.

(3-2) Light Transmittance

Using a spectrophotometer "UV-3150" manufactured by Shimadzu Corporation, a light was irradiated from the conductive surface side to measure the light transmittance at a wavelength of 550 nm.

(3-3) Light Absorptivity of Carbon Nanotube Layer

From the reflectance of the conductive surface, that of the opposite surface of the conductive surface and the light transmittance that were measured in (3-1) and (3-2), the light absorptivity of the carbon nanotube layer was calculated using the following equation.

Light absorptivity of carbon nanotube layer (%) = 100% - Light transmittance (%) - Reflectance of conductive surface (%) - Reflectance of the opposite surface of conductive surface (%)

(4) Total Light Transmittance

In accordance with JIS K 7361 (1997), the total light transmittance was measured using a turbidimeter NDH2000 manufactured by Nippon Denshoku Industries Co., Ltd.

(5) Water Contact Angle

In an atmosphere having a room temperature of 25°C and a relative humidity of 50%, 1 to 4 $\mu$L of water was dropped onto the film surface using a syringe. Using a contact angle meter (model CA-X manufactured by Kyowa Interface Science Co., Ltd.), a droplet was observed from a horizontal cross-section to determine the angle created between a tangent line of the droplet edge and the film plane.

(6) Heat Resistance Stability

A transparent conductive laminate was sampled in a size of 5 cm $\times$ 10 cm and subjected to the following heat treatment. The surface resistance of the sample after the heat treatment was divided by the surface resistance of the sample prior to the heat treatment and the thus obtained value was used as an index of the heat resistance stability.
Heat treatment: the following steps (i) and (ii) were carried out consecutively.
(i) retaining the sample for 1 hour in a 150°C hot-air oven; and
(ii) leaving the resulting sample to stand for 24 hours in an atmosphere having a room temperature of 25°C and a relative humidity of 50%

(7) Moist-heat Resistance Stability

A transparent conductive laminate was sampled in a size of 5 cm $\times$ 10 cm and subjected to the following moist-heat treatment. The surface resistance of the sample after the moist-heat treatment was divided by the surface resistance of the sample prior the moist-heat treatment and the thus obtained value was used as an index of the moist-heat resistance stability.
Moist-heat treatment: the following steps (iii) and (iv) were carried out consecutively.
(iii) retaining the sample for 1 hour in a moist-heat oven having a temperature of 60°C and a relative humidity of 90%; and

(iv) leaving the resulting sample for 3 minutes to stand in an atmosphere having a room temperature of 25°C and a relative humidity of 50% (8) Long-term Heat resistance stability

A transparent conductive laminate was sampled in a size of 5 cm × 10 cm and subjected to the following long-term heat treatment. The surface resistance of the sample after the long-term heat treatment was divided by the surface resistance of the sample prior the long-term heat treatment and the thus obtained value was used as an index of the long-term heat resistance stability.

Long-term heat treatment: the following steps (v) and (vi) were carried out consecutively.
(v) retaining the sample for 500 hour in a 80°C hot-air oven; and

(vi) leaving the resulting sample to stand for 3 minutes in an atmosphere having a room temperature of 25°C and a relative humidity of 50% (9) Surface Resistance of Carbon Nanotube Layer at 96% Total Light Transmittance

In accordance with the method described in the section of [Formation of Carbon Nanotube Layer] below, samples in which the ratio of the total light transmittance of transparent conductive laminate before and after coating a carbon nanotube thereon (total light transmittance of the carbon nanotube layer) is not less than 96% and samples in which this ratio is not higher than 96% were each prepared in at least one level. For each of the thus prepared samples, the surface resistance and the total light transmittance of the carbon nanotube layer were measured to calculate the surface resistance of the carbon nanotube layer at 96% total light transmittance by interpolation.

(10) Surface Resistance at 75% White Reflectance

In accordance with the method described in the section of [Formation of Carbon Nanotube Layer] below, samples in which the white reflectance after the formation of an overcoat layer is not less than 75% and samples in which this white reflectance is not higher than 75% were each prepared in at least one level. For each of the thus prepared samples, the surface resistance and the white reflectance were measured to calculate the surface resistance at 75% white reflectance by interpolation.

(11) Surface Resistance of Carbon Nanotube Layer at 5% Light Absorptivity

In accordance with the method described in the section of [Formation of Carbon Nanotube Layer] below, samples in which the light absorptivity of the carbon nanotube layer after the formation of an overcoat layer is not less than 5% and samples in which this light absorptivity of the carbon nanotube layer is not higher than 5% were each prepared in at least one level. For each of the thus prepared samples, the surface resistance and the light absorptivity of the carbon nanotube layer were measured to calculate the surface resistance of the carbon nanotube layer at 5% light absorptivity of by interpolation.

(12) Surface Resistance of Carbon Nanotube Layer at 90% Total Light Transmittance after Formation of Overcoat Layer

In accordance with the method described in the section of [Formation of Carbon Nanotube Layer] below, samples in which the total light transmittance after the formation of an overcoat layer is not less than 90% and samples in which this total light transmittance is not higher than 90% were each prepared in at least one level. For each of the thus prepared samples, the surface resistance and the total light transmittance of the carbon nanotube layer were measured to calculate the surface resistance of Carbon Nanotube Layer at 90% total light transmittance by interpolation.

(13) Thickness of Undercoat Layer

With only an undercoat layer being provided on a PET film used as a substrate, the opposite surface of the surface provided with the undercoat layer was roughened uniformly using a #320 to #400 waterproof sandpaper such that the 60°-gloss value (JIS Z 8741 (1997)) became not greater than 10. Then, the thus roughened surface was colored by applying thereto a black paint such that the visible light transmittance became 5% or less. Using a spectrophotometer (UV-3150) manufactured by Shimadzu Corporation, at an incidence angle of 5° at the measuring surface, the absolute reflectance spectrum in a wavelength region of 200 nm to 1,200 nm was measured at 1-nm intervals to determine the wavelength showing the minimum reflectance in a region of 200 nm to 1,200 nm.
$$d_U = \lambda/4n$$

($d_U$: thickness of undercoat layer (nm), $\lambda$: wavelength showing the minimum reflectance (nm), n: refractive index of transparent protective film (material: silica), 1.44)

It is noted here that, in the present examples, in cases where $\lambda$ was smaller than 200 nm or larger than 1,200 nm, a theoretical thickness of the undercoat layer, which is described below, was used instead as the thickness of the undercoat layer.

$$\text{Theoretical thickness (nm)} = (\text{Solids concentration of coating solution}$$

$$(\text{wt\%})/100) \times \text{Wire bar number } (\mu m) \times 1.5 \times 1/1{,}000$$

(14) Thickness of Overcoat Layer

With only an overcoat layer being provided on a PET film which used as a substrate, the opposite surface of the surface provided with the overcoat layer was roughened uniformly using a #320 to #400 waterproof sandpaper such that the 60°-gloss value (JIS Z 8741 (1997)) became not greater than 10. Then, the thus roughened surface was colored by applying thereto a black paint such that the visible light transmittance became 5% or less. Using a spectrophotometer (UV-3150) manufactured by Shimadzu Corporation, at an incidence angle of 5° at the measuring surface, the absolute reflectance spectrum in a wavelength region of 200 nm to 1,200 nm was measured at 1-nm intervals to determine the wavelength showing the minimum reflectance in a region of 200 nm to 1,200 nm.

$$d_O = \lambda/4n$$

(do: thickness of overcoat layer (nm), $\lambda$: wavelength showing the minimum reflectance (nm), n: refractive index of transparent protective film (material: silica), 1.44)

It is noted here that, also for the thickness of the overcoat layer, in cases where $\lambda$ was smaller than 200 nm or larger than 1,200 nm, a theoretical thickness derived in the same manner as that of the undercoat layer was used instead as the thickness of the overcoat layer.

(15) XPS

Using "Quantera SXM" manufactured by Ulvac-Phi, Inc., the $C_{ls}$ binding energy was measured with $AlK_{\alpha 1,2}$ excitation X-ray (1486.6 eV) at a photoelectron X-ray angle of 15°. In this case, abscissa correction was performed to a $C_{ls}$ main peak of 284.6 eV.

(16) Wettability of Carbon Nanotube Dispersion Liquid with Surface of Undercoat Layer or PET Substrate

As for the wettability of a carbon nanotube dispersion liquid with a surface of undercoat layer or a surface of PET substrate, the carbon nanotube dispersion liquid was applied and dry-fixed onto the above-described surface of undercoat layer or the surface of PET substrate and the resulting dry carbon nanotube coating film was visually observed. When the coating film was uniformly formed, the wettability was judged as satisfactory, and when the coating film was not uniformly formed, the wettability was judged as poor.

[Undercoat Layer Formation Example 1]

By the following operations, a hydrophilic silica undercoat layer containing silica microparticles of about 30 nm in diameter exposed on the surface was formed using polysilicate as a binder.

A Mega Aqua Hydrophilic DM Coat (DM-30-26G-N1; manufactured by Ryowa Corporation) containing hydrophilic silica microparticles of about 30 nm in diameter and polysilicate was used as a coating solution for silica film formation.

Using a #8 wire bar, the above-described coating solution for silica film formation was applied onto a 188 μm-thick biaxially-stretched polyethylene terephthalate film, "LUMIRROR" U46 manufactured by Toray Industries, Inc. Then, the resultant was dried for 1 minute in a dryer at 80°C.

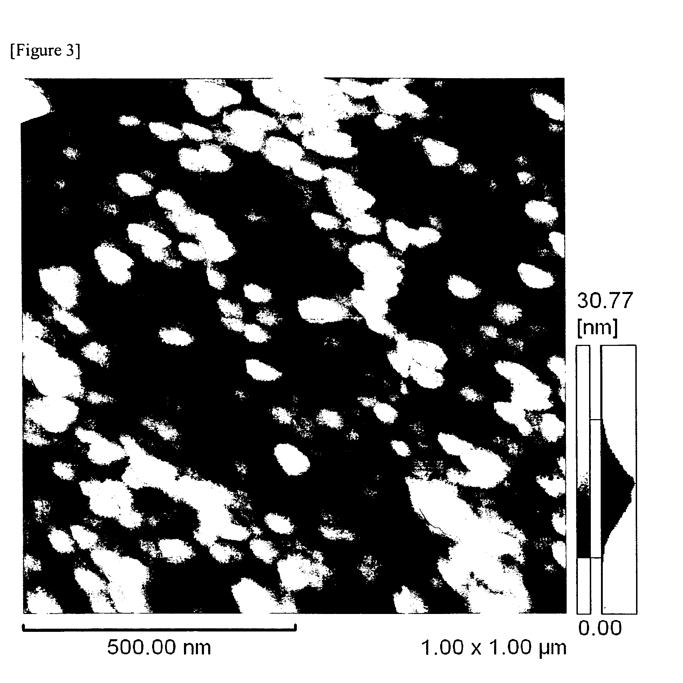

Fig. 3 shows a surface AFM image.

[Undercoat Layer Formation Example 2]

A hydrophilic silica undercoat layer containing silica microparticles of about 30 nm in diameter exposed on the surface was formed using polysilicate as a binder in the same manner as in [Undercoat Layer Formation Example 1] except that a #3 wire bar was used.

[Undercoat Layer Formation Example 3]

A hydrophilic silica undercoat layer containing silica microparticles of about 30 nm in diameter exposed on the surface was formed using polysilicate as a binder in the same manner as in [Undercoat Layer Formation Example 1] except that a Mega Aqua Hydrophilic DM Coat DM-30-26G-N1-A (manufactured by Ryowa Corporation; having a slightly lower hydrophilicity as compared to the one used in [Undercoat Layer Formation Example 1]) containing hydrophilic silica microparticles of about 30 nm in diameter and polysilicate was used as the coating solution for silica film formation.

[Undercoat Layer Formation Example 4]

By the following operations, a hydrophilic silica undercoat layer composed of a silica prepared by a sol-gel method was formed.

In a 100-mL plastic container, 20 g of ethanol was placed and 40 g of n-butyl silicate was added thereto and stirred for 30 minutes. Then, after adding thereto 10 g of 0.1 N hydrochloric acid aqueous solution, the resultant was stirred for 2 hours and left to stand at 4°C for 12 hours. The resulting solution was diluted with a mixed solution of toluene, isopropyl alcohol and methyl ethyl ketone to a solids concentration of 1.0% by mass, thereby obtaining a coating solution.

The thus obtained coating solution was applied onto a LUMIRROR U46 manufactured by Toray Industries, Inc. using a #8 wire bar. Then, the resultant was dried for 1 minute in a dryer at 125°C.

Thereafter, a corona treatment was performed by the method shown in Fig. 1. Using a Type-H pinhole tester manufactured by Densok Precision Industry Corp. as a high-voltage application device 101, a DC voltage of 10 kV was generated between ground (not shown) and an electrode 102. Then, after separating the electrode 102 and a transparent substrate 104 by a distance of 150 μm, a partition wall was arranged therebetween. An operation of moving the electrode at a speed of about 2 cm/sec in the direction of the arrow indicated as "A" in Fig. 1 was performed three times.

[Undercoat Layer Formation Example 5]

By the following operations, a hydrophilic alumina undercoat layer composed of alumina was formed.

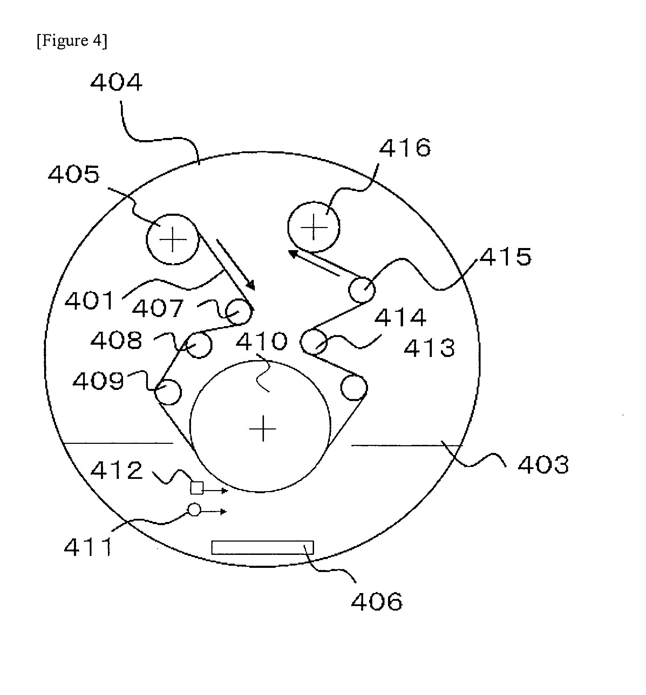

Using a roll-up type vacuum vapor deposition apparatus having the structure shown in Fig. 4, on one side of a 12-μm biaxially-stretched polyethylene terephthalate film ("LUMIRROR" 12T705 manufactured by Toray Industries, Inc.; hereinafter, referred to as polymer film) used as a transparent substrate, an alumina layer was formed by vaporizing aluminum, which was used as a vapor deposition material, by a resistance heating method and then introducing thereto an oxygen gas. First, in a rolling chamber 404 of the roll-up type vapor deposition apparatus 403, a polymer film 401 set on a roll-out roller 405 was unrolled at a transfer rate of 100 m/min and passed through a cooling drum 410 via guide rolls 407, 408 and 409. From a boat 406 on which a wire of aluminum or the like was introduced, aluminum was vaporized, and oxygen plasma was irradiated from a plasma electrode 412 having a gas introduction mechanism at an oxygen gas flow rate of 0.6 L/min and a plasma introducing power of 3.0 kW, thereby forming an aluminum oxide layer (not shown) on the surface of the polymer film 401 on the cooling drum 410. Thereafter, the resulting polymer film on which an alumina layer was formed was rolled up by a roll-up roller 416 via guide rolls 413, 414 and 415.

[Undercoat Layer Formation Example 6]

A hydrophilic silica undercoat layer composed of a silica prepared by a sol-gel method was formed in the same manner as in [Undercoat Layer Formation Example 4] except that the corona treatment was not performed.

[Substrate Surface Treatment Example 1]

The same corona treatment as in [Undercoat Layer Formation Example 4] was performed on "LUMIRROR" U46 manufactured by Toray Industries, Inc. By this treatment, the hydrophilicity of the substrate surface was improved and the water contact angle was reduced from 62° to 52°.

[Catalyst Preparation Example: catalyst metal salt supported on magnesia]

Ferric ammonium citrate (2.46 g; manufactured by Wako Pure Chemicals Industries, Ltd.) was dissolved in 500 mL of methanol (manufactured by Kanto Chemical Co., Inc.). To the resulting solution, 100.0 g of magnesium oxide (MJ-30 manufactured by Iwatani Chemical Industry Co., Ltd.) was added and vigorously stirred for 60 minutes using a stirrer. The resulting suspension was concentrated to dryness under reduced pressure at 40°C. The thus obtained powder was heat-dried at 120°C to remove methanol, thereby obtaining a catalyst in which a metal salt was supported on magnesium oxide powder. The thus obtained solid content was pulverized using a mortar and sieved to recover particles having a particle size in the range of 20 to 32-mesh (0.5 to 0.85 mm). The thus obtained catalyst had an iron content of 0.38% by mass and a bulk density of 0.61 g/mL. The above-described operations were repeated and the resultants were subjected to the following experiments.

[Carbon Nanotube Assembly Production Example: Synthesis of carbon nanotube assembly]

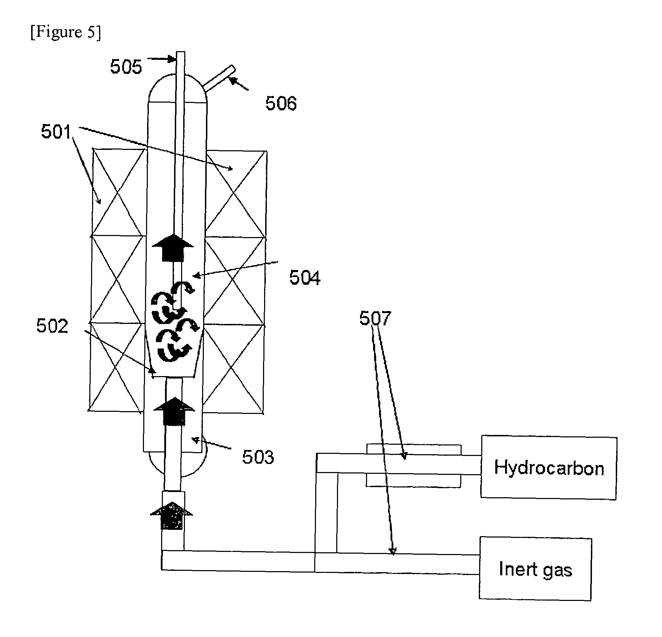

Using the apparatus shown in Fig. 5, a carbon nanotube was synthesized. A reactor 503 is a cylindrical quartz tube of 75 mm in inner diameter and 1,100 mm in length. The reactor is equipped with a quartz sintered plate 502 in the central part; a mixed gas introduction pipe 508, which is an inert gas and material gas supply line, in the lower part of the quartz tube; and a waste gas pipe 506 in the upper part. Further, the reactor is also equipped with three electric furnace 501s as heaters surrounding the periphery thereof such that the reactor can be maintained at an arbitrary temperature. The reactor is equipped with a thermocouple 505 as well for detecting the temperature inside the reactor tube.
A catalyst layer 504 was formed by introducing 132 g of the solid catalyst prepared in Catalyst Preparation Example onto the quartz sintered plate provided in the central part of the reactor arranged in the vertical direction. While heating the thus formed catalyst layer, using a mass flow controller 507, a nitrogen gas was fed at a rate of 16.5 L/min from the bottom part of the reactor toward the upper part thereof and allowed to pass through the catalyst layer until the temperature inside the reactor tube became about 860°C. Thereafter, while feeding a nitrogen gas, using the mass flow controller 507, a methane gas was further introduced at a rate of 0.78 L/min for 60 minutes and allowed to pass through the catalyst layer, thereby performing a reaction. Here, the contact time (W/F), which is obtained by dividing the weight of the solid catalyst with the flow rate of methane, was 169 min·g/L and the linear velocity of the methane-containing gas was 6.55 cm/sec. The feeding of methane gas was terminated and the quartz reactor tube was cooled to room temperature while passing nitrogen gas therethrough at a rate of 16.5 L/min.
Heating was terminated and the reactor was left to cool to room temperature. Then, once the reactor was cooled to room temperature, the resulting carbon nanotube-containing composition containing the catalyst and carbon nanotube was taken out therefrom.

[Purification and Oxidation Treatment of Carbon Nanotube Assembly]

In 2,000 mL of 4.8N hydrochloric acid aqueous solution, 130 g of the carbon nanotube-containing composition containing the catalyst and carbon nanotube, which was obtained in Carbon Nanotube Assembly Production Example, was stirred for 1 hour to dissolve iron which is the catalyst metal and MgO which is the carrier thereof. After filtering the resulting black suspension, the thus obtained filtration product was again placed in 400 mL of 4.8N hydrochloric acid aqueous solution to perform a MgO removal treatment and the resultant was filtered. These operations were repeated three times (MgO removal treatment). Then, after washing the resultant with ion-exchanged water until the suspension of filtration product became neutral, the resulting carbon nanotube-containing composition was stored in wet condition with water. Here, the total weight of the carbon nanotube-containing composition in wet condition with water was 102.7 g (concentration of carbon nanotube-containing composition: 3.12% by mass).
To the thus obtained carbon nanotube-containing composition in wet condition, a concentrated nitric acid (manufactured by Wako Pure Chemicals Industries, Ltd.; first class, assay 60 to 61%) was added in a weight of about 300 times of the dry weight of the carbon nanotube-containing composition. Then, in an oil bath at about 140°C, the resulting mixture was heated to reflux with stirring for 25 hours. Thereafter, the resulting nitric acid solution containing the carbon nanotube-containing composition was 3-fold diluted with ion-exchanged water and suction-filtered. After washing the resultant with ion-exchanged water until the suspension of filtration product became neutral, a carbon nanotube assembly was obtained in wet condition with water. Here, the total weight of the carbon nanotube-containing composition in wet condition with water was 3.351 g (concentration of carbon nanotube-containing composition: 5.29 wt%).

[Preparation of Carbon Nanotube Dispersion Liquid 1]

The thus obtained carbon nanotube assembly in wet condition (25 mg based on dry weight), 2.5 g of 1% by mass sodium carboxymethyl cellulose aqueous solution (DAICEL 1140 manufactured by Daicel FineChem Ltd. (weight average molecular weight: 450,000)) and 6.7 g of zirconia beads (TORAYCERAM manufactured by Toray Industries, Inc.; beads size: 0.8 mm) were added to a container and the resulting mixture was adjusted to have a pH of 10 using 28% aqueous ammonia solution (manufactured by Kishida Chemical Co., Ltd.). This container was shaken for 2 hours using a vibration ball mill (VS-1 manufactured by Irie Shokai Co., Ltd.; vibration rate: 1,800 cpm (60 Hz)) to prepare a carbon nanotube paste.

Then, the thus obtained carbon nanotube paste was diluted with ion-exchanged water to a carbon nanotube concentration of 0.15% by mass and 10 g of the resulting diluent was again adjusted to have a pH of 10 using 28% aqueous ammonia solution. The thus obtained aqueous solution was subjected to a 1.5-minute dispersion treatment with ice cooling, using an ultrasonic homogenizer (VCX-130 manufactured by Ieda Trading Corporation) at an output of 20 W (1 kW·min/g). During this dispersion treatment, the solution temperature was maintained at not higher than 10°C. The resulting solution was centrifuged at 10,000 G for 15 minutes using a high-speed centrifuge (MX-300 manufactured by Tomy Seiko Co., Ltd.) to obtain a carbon nanotube dispersion liquid in an amount of 9 g.

[Preparation of Carbon Nanotube Dispersion Liquid 2]

The thus obtained carbon nanotube assembly in wet condition (25 mg based on dry weight), 0.833 g of 6% by mass sodium carboxymethyl cellulose aqueous solution (CELLOGEN 5A manufactured by Dai-Ichi Kogyo Seiyaku Co., Ltd. (weight average molecular weight: 80,000)), 0.8 g of ion-exchanged water and 13.3 g of zirconia beads (TORAYCERAM manufactured by Toray Industries, Inc.; beads size: 0.8 mm) were added to a container and the resulting mixture was adjusted to have a pH of 10 using 28% aqueous ammonia solution (manufactured by Kishida Chemical Co., Ltd.) (dispersant/carbon nanotube mass ratio = 2). This container was shaken for 2 hours using a vibration ball mill (VS-1 manufactured by Irie Shokai Co., Ltd.; vibration rate: 1,800 cpm (60 Hz)) to prepare a carbon nanotube paste.

Then, the thus obtained carbon nanotube paste was diluted with ion-exchanged water to a carbon nanotube concentration of 0.15% by mass and 10 g of the resulting diluent was again adjusted to have a pH of 10 using 28% aqueous ammonia solution. The thus obtained aqueous solution was subjected to a 1.5-minute dispersion treatment with ice cooling, using an ultrasonic homogenizer (VCX-130 manufactured by Ieda Trading Corporation) at an output of 20 W (0.6 kW·min/g). During this dispersion treatment, the solution temperature was maintained at not higher than 10°C. The resulting solution was centrifuged at 10,000 G for 15 minutes using a high-speed centrifuge (MX-300 manufactured by Tomy Seiko Co., Ltd.) to obtain a carbon nanotube dispersion liquid in an amount of 9 g. Thereafter, water was added thereto to a final carbon nanotube assembly concentration of 0.08% by mass to prepare a film coating solution.

[Preparation of Carbon Nanotube Dispersion Liquid 3]

A carbon nanotube dispersion liquid was obtained in an amount of 9 g in the same manner as in the preparation of the carbon nanotube dispersion liquid 2 except that the amount of 6% by mass sodium carboxymethyl cellulose was changed to 1.04 g (dispersant/carbon nanotube mass ratio = 2.5).

[Preparation of Carbon Nanotube Dispersion Liquid 4]

A carbon nanotube dispersion liquid was obtained in an amount of 9 g in the same manner as in the preparation of the carbon nanotube dispersion liquid 2 except that the amount of 6% by mass sodium carboxymethyl cellulose was changed to 1.25 g (dispersant/carbon nanotube mass ratio = 3).

[Preparation of Carbon Nanotube Dispersion Liquid 5]

A carbon nanotube dispersion liquid was obtained in an amount of 9 g in the same manner as in the preparation of the carbon nanotube dispersion liquid 2 except that the amount of 6% by mass sodium carboxymethyl cellulose was changed to 2.50 g (dispersant/carbon nanotube mass ratio = 6).

[Preparation of Carbon Nanotube Dispersion Liquid 6]

In a 20-mL container, 15 mg (based on dry mass) of the carbon nanotube obtained in the above carbon nanotube-containing composition production step and 300 mg of a 30% by mass ammonium polystyrene sulfonate aqueous solution (manufactured by Aldrich; weight average molecular weight: 200,000) (dispersant/carbon nanotube mass ratio = 6) were weighed and distilled water was added thereto to a total weight of 10 g. The resulting solution was subjected to a 7.5-minute dispersion treatment with ice cooling using an ultrasonic homogenizer (VCX-130 manufactured by Ieda Trading Corporation) at an output of 20 W, thereby preparing a carbon nanotube solution. In this solution, the mass ratio of the dispersant with respect to the mass of carbon nanotube is 6. The thus obtained solution was centrifuged at 10,000 G for 15 minutes using a high-speed centrifuge (MX-300 manufactured by Tomy Seiko Co., Ltd.) to obtain a carbon nanotube dispersion liquid in an amount of 9 g.

[Preparation of Carbon Nanotube Dispersion Liquid 7]

A carbon nanotube dispersion liquid was obtained in an amount of 9 g in the same manner as in the preparation of the carbon nanotube dispersion liquid 2 except that the pH at the time of adjusting the carbon nanotube paste and the carbon nanotube dispersion liquid was changed to 4.5.

[Preparation of Carbon Nanotube Dispersion Liquid 8]

A carbon nanotube dispersion liquid was obtained in an amount of 9 g in the same manner as in the preparation of the carbon nanotube dispersion liquid 2 except that the pH at the time of adjusting the carbon nanotube paste and the carbon nanotube dispersion liquid was changed to 5.5.

[Preparation of Carbon Nanotube Dispersion Liquid 9]

A carbon nanotube dispersion liquid was obtained in an amount of 9 g in the same manner as in the preparation of the carbon nanotube dispersion liquid 2 except that the pH at the time of adjusting the carbon nanotube paste and the carbon nanotube dispersion liquid was changed to 7.

[Preparation of Carbon Nanotube Dispersion Liquid 10]

A carbon nanotube dispersion liquid was obtained in an amount of 9 g in the same manner as in the preparation of the carbon nanotube dispersion liquid 2 except that the pH at the time of adjusting the carbon nanotube paste and the carbon nanotube dispersion liquid was changed to 9.

[Preparation of Carbon Nanotube Dispersion Liquid 11]

A carbon nanotube dispersion liquid was obtained in an amount of 9 g in the same manner as in the preparation of the carbon nanotube dispersion liquid 2 except that the pH at the time of adjusting the carbon nanotube paste and the carbon nanotube dispersion liquid was changed to 11.

[Preparation of Carbon Nanotube Dispersion Liquid 12]

The thus obtained carbon nanotube assembly in wet condition (15 mg based on dry weight) and 4.5 g of 1 wt% sodium carboxymethyl cellulose aqueous solution (manufactured by Sigma, 90 kDa, 50 to 200 cps) (dispersant/carbon nanotube mass ratio = 3) were weighed and ion-exchanged water was added thereto to a total weight of 10 g. The resulting solution was adjusted to have a pH of 4.0 using nitric acid and then subjected to a 7.5-minute dispersion treatment with ice cooling using an ultrasonic homogenizer (CX-130 manufactured by Ieda Trading Corporation) at an output of 20 W, thereby preparing a carbon nanotube solution. During this dispersion treatment, the solution temperature was maintained at not higher than 10°C. The resulting solution was centrifuged at 10,000 G for 15 minutes using a high-speed centrifuge (MX-300 manufactured by Tomy Seiko Co., Ltd.) to obtain a carbon nanotube dispersion liquid in an amount of 9 g.

[Formation of Carbon Nanotube Layer]

Ion-exchanged water was added to the above-described carbon nanotube dispersion liquid to adjust the amount of carbon nanotube to 0.03% by mass to 0.04% by mass. Then, the resulting carbon nanotube dispersion liquid was, using a wire bar, applied onto a transparent substrate or PET transparent substrate on which the above-described undercoat was formed, and the resultant was dried for 1 minute in a dryer at 80°C to fix the carbon nanotube composition. The light transmittance was adjusted by adjusting the above-described carbon nanotube concentration and wire bar number.

[Rinse Treatment]

The transparent conductive laminate on which a carbon nanotube layer was thus formed was rinsed with ion-exchanged water for 30 seconds to remove the dispersant. Thereafter, water droplets adhering to the film were removed using an air duster and the resultant was then dried at normal temperature.

[Overcoat Layer Formation Example 1]

In a 100-mL plastic container, 20 g of ethanol was placed and 40 g of n-butyl silicate was added thereto and stirred for 30 minutes. Then, after adding thereto 10 g of 0.1N hydrochloric acid aqueous solution, the resultant was stirred for 2 hours and left to stand at 4°C for 12 hours. The resulting solution was diluted with a mixed solution of toluene, isopropyl alcohol and methyl ethyl ketone to a solids concentration of 0.1 % by mass.
The thus obtained coating solution was applied onto a carbon nanotube layer using a #8 wire bar. Then, the resultant was dried for 1 minute in a dryer at 125°C.

[Overcoat Layer Formation Example 2]

An overcoat layer was formed in the same manner as in [Overcoat Layer Formation Example 1] except that the dilution with the mixed solution of toluene, isopropyl alcohol and methyl ethyl ketone was performed to a solids concentration of 1% by mass.

(Example 1)

An undercoat layer was formed in accordance with [Undercoat Layer Formation Example 1]. Further, on this undercoat layer, a carbon nanotube layer was formed using the carbon nanotube dispersion liquid 1. Then, on this carbon nanotube layer, an overcoat layer was formed by the method of [Overcoat Layer Formation Example 1] to prepare a transparent conductive laminate.

(Examples 2 to 13 and Comparative Examples 1 to 6)

The respective transparent conductive laminates were prepared in the same manner as in Example 1 except that the combination of the substrate surface treatment, undercoat layer formation, carbon nanotube dispersion liquid, overcoat layer formation and rinse treatment was changed as shown in Table 1. It is noted here that, in Table 1, the indication "None" for the item "Substrate surface treatment or undercoat layer" denotes that the carbon nanotube dispersion liquid was directly applied without forming an undercoat on the "LUMIRROR" U46 manufactured by Toray Industries, Inc. or without subjecting the substrate to a corona treatment.
[Table 1]

[Table 1]

| | Substrate Surface Treatment or Undercoat Layer Formation | Carbon Nanotube Dispersion Liquid | Rinse treatment | Overcoat Layer |
|---|---|---|---|---|
| Example 1 | Undercoat Layer Formation Example 1 | Carbon Nanotube Dispersion Liquid 1 | absence | Overcoat Layer Formation Example 1 |
| Example 2 | Undercoat Layer Formation Example 1 | Carbon Nanotube Dispersion Liquid 2 | absence | Overcoat Layer Formation Example 1 |
| Example 3 | Undercoat Layer Formation Example 1 | Carbon Nanotube Dispersion Liquid 4 | absence | Overcoat Layer Formation Example 1 |
| Example 4 | Undercoat Layer Formation Example 1 | Carbon Nanotube Dispersion Liquid 5 | absence | Overcoat Layer Formation Example 1 |

(continued)

| | Substrate Surface Treatment or Undercoat Layer Formation | Carbon Nanotube Dispersion Liquid | Rinse treatment | Overcoat Layer |
|---|---|---|---|---|
| Example 5 | Undercoat Layer Formation Example 3 | Carbon Nanotube Dispersion Liquid 2 | absence | Overcoat Layer Formation Example 1 |
| Example 6 | Undercoat Layer Formation Example 4 | Carbon Nanotube Dispersion Liquid 1 | absence | Overcoat Layer Formation Example 2 |
| Example 7 | Undercoat Layer Formation Example 5 | Carbon Nanotube Dispersion Liquid 1 | absence | Overcoat Layer Formation Example 2 |
| Example 8 | Undercoat Layer Formation Example 1 | Carbon Nanotube Dispersion Liquid 6 | absence | Overcoat Layer Formation Example 1 |
| Example 9 | Undercoat Layer Formation Example 1 | Carbon Nanotube Dispersion Liquid 8 | absence | Overcoat Layer Formation Example 1 |
| Example 10 | Undercoat Layer Formation Example 1 | Carbon Nanotube Dispersion Liquid 9 | absence | Overcoat Layer Formation Example 1 |
| Example 11 | Undercoat Layer Formation Example 1 | Carbon Nanotube Dispersion Liquid 10 | absence | Overcoat Layer Formation Example 1 |
| Example 12 | Undercoat Layer Formation Example 1 | Carbon Nanotube Dispersion Liquid 11 | absence | Overcoat Layer Formation Example 1 |
| Example 13 | Undercoat Layer Formation Example 2 | Carbon Nanotube Dispersion Liquid 3 | absence | Overcoat Layer Formation Example 2 |
| Comparative Example 1 | Substrate Surface Treatment Example 1 | Carbon Nanotube Dispersion Liquid 1 | absence | Overcoat Layer Formation Example 1 |
| Comparative Example 2 | Substrate Surface Treatment Example 11 | Carbon Nanotube Dispersion Liquid 1 | absence | Overcoat Layer Formation Example 2 |
| Comparative Example 3 | absence | Carbon Nanotube Dispersion Liquid 6 | absence | Overcoat Layer Formation Example 1 |
| Comparative Example 4 | Undercoat Layer Formation Example 6 | Carbon Nanotube Dispersion Liquid 1 | absence | absence |
| Comparative Example 5 | Undercoat Layer Formation Example 1 | Carbon Nanotube Dispersion Liquid 7 | absence | Overcoat Layer Formation Example 1 |
| Comparative Example 6 | absence | Carbon Nanotube Dispersion Liquid 12 | presence | Overcoat Layer Formation Example 2 |

Table 2 shows, with regard to Examples 1 to 13 and Comparative Examples 1 to 6: the dispersant/carbon nanotube mass ratio; pH of the carbon nanotube dispersion liquid; water contact angle of the surface of the undercoat layer or the PET transparent substrate; thickness of the undercoat layer; wettability of the carbon nanotube dispersion liquid with the surface of the undercoat layer or the PET transparent substrate; surface resistance of the carbon nanotube layer at 96% total light transmittance; surface resistance at 75% white reflectance; surface resistance of the carbon nanotube layer at 5% light absorptivity; thickness of the overcoat layer; surface resistance of the carbon nanotube layer at 90% total light transmittance after formation of the overcoat layer; heat resistance stability; moist-heat resistance stability; and long-term heat resistance stability. In Table 2, "-" denotes the absence of corresponding item and "N.D." denotes the absence of evaluation data.

[Table 2]

[Table 2]

| | Dispersant/carbon nanotube mass ratio | pH of the carbon nanotube dispersion liquid | Water contact angle of the surface of the undercoat layer or the PET substrate (°) | Thickness of the undercoat layer (nm) | Wettability of Carbon Nanotube Dispersion Liquid with the Surface of Undercoat Layer or PET Substrate | Surface Resistance of Carbon Nanotube Layer at 96% Total Light Transmittance (Ω/□) | Surface Resistance at 75% White Reflectance (Ω/□) | Surface Resistance of Carbon Nanotube Layer at 5% Light Absorptivity (Ω/□) | Thickness of the overcoat layer (nm) | Surface Resistance of Carbon Nanotube Layer at 90% Total Light Transmittance after Formation of Overcoat Layer (Ω/□) | Heat resistance stability | Moist-heat resistance stability | Long-term heat resistance stability |
|---|---|---|---|---|---|---|---|---|---|---|---|---|---|
| Example 1 | 1 | 10 | 5.5 | 100 | good | $7.0\times10^2$ | $9.0\times10^2$ | $9.0\times10^2$ | 12 | $9.0\times10^2$ | 1.0 | 1.0 | N.D. |
| Example 2 | 2 | 10 | 5.5 | 100 | good | $4.0\times10^2$ | $4.5\times10^2$ | $4.5\times10^2$ | 12 | $4.5\times10^2$ | 1.0 | 0.8 | 1.9 |
| Example 3 | 3 | 10 | 5.5 | 100 | good | $4.0\times10^2$ | $4.5\times10^2$ | $4.5\times10^2$ | 12 | $4.5\times10^2$ | 1.0 | 0.9 | 1.9 |
| Example 4 | 6 | 10 | 5.5 | 100 | good | $4.5\times10^2$ | $5.5\times10^2$ | $5.5\times10^2$ | 12 | $5.5\times10^2$ | 1.0 | 0.9 | N.D. |
| Example 5 | 2 | 10 | 13 | 100 | good | $4.5\times10^2$ | $7.0\times10^2$ | $7.0\times10^2$ | 12 | $7\times10^2$ | 1.1 | 1.0 | N.D. |
| Example 6 | 1 | 10 | 7.1 | 100 | good | $6.0\times10^2$ | $7.0\times10^2$ | $7.0\times10^2$ | 60 | $1.5\times10^3$ | 1.0 | 1.2 | N.D. |
| Example 7 | 1 | 10 | 23 | 100 | good | $6.0\times10^2$ | $7.2\times10^2$ | $7.2\times10^2$ | 60 | $2.0\times10^3$ | 0.8 | 1.2 | N.D. |
| Example 8 | 6 | 10 | 5.5 | 100 | good | $6.4\times10^2$ | $8.0\times10^2$ | $8.0\times10^2$ | 12 | $8.0\times10^2$ | 1.2 | N.D. | N.D. |
| Example 9 | 2 | 5.5 | 5.5 | 100 | good | $6.2\times10^2$ | $7.5\times10^2$ | $7.5\times10^2$ | 12 | $7.5\times10^2$ | 1.0 | 0.9 | N.D. |
| Example 10 | 2 | 7.0 | 5.5 | 100 | good | $4.6\times10^2$ | $5.4\times10^2$ | $5.4\times10^2$ | 12 | $5.4\times10^2$ | 1.2 | 1.0 | N.D. |
| Example 11 | 2 | 9.0 | 5.5 | 100 | good | $4.0\times10^2$ | $4.5\times10^2$ | $4.5\times10^2$ | 12 | $4.5\times10^2$ | 1.1 | 1.0 | N.D. |
| Example 12 | 2 | 11 | 5.5 | 100 | good | $4.2\times10^2$ | $5.0\times10^2$ | $5.0\times10^2$ | 12 | $5.0\times10^2$ | 1.1 | 1.0 | N.D. |
| Example 13 | 2.5 | 10 | 5.5 | 40 | good | $4.0\times10^2$ | $4.2\times10^2$ | $4.2\times10^2$ | 60 | $4.2\times10^2$ | 0.8 | 0.9 | 1.0 |
| Comparative Example 1 | 1 | 10 | 52 | - | good | $1.4\times10^3$ | $1.6\times10^3$ | $1.6\times10^3$ | 12 | $1.6\times10^3$ | 1.5 | 2.0 | N.D. |
| Comparative Example 2 | 1 | 10 | 52 | - | good | $1.5\times10^3$ | $1.7\times10^3$ | $1.7\times10^3$ | 60 | $1.7\times10^3$ | 0.9 | 1.5 | N.D. |
| Comparative Example 3 | 6 | 10 | 62 | 100 | good | $1.7\times10^3$ | $1.2\times10^3$ | $1.2\times10^3$ | 12 | $1.2\times10^3$ | 1.1 | N.D. | N.D. |
| Comparative Example 4 | 1 | 10 | 63 | 100 | bad | - | - | - | - | - | - | - | N.D. |

| | Dispersant/ carbon nanotube mass ratio | pH of the carbon nanotube dispersion liquid | Water contact angle of the surface of the undercoat layer or the PET substrate (°) | Thickness of the undercoat layer (nm) | Wettability of Carbon Nanotube Dispersion Liquid with the Surface of Undercoat Layer or PET Substrate | Surface Resistance of Carbon Nanotube Layer at 96% Total Light Transmittance ($\Omega/\square$) | Surface Resistance at 75% White Reflectance ($\Omega/\square$) | Surface Resistance of Carbon Nanotube Layer at 5% Light Absorptivity ($\Omega/\square$) | Thickness of the overcoat layer (nm) | Surface Resistance of Carbon Nanotube Layer at 90% Total Light Transmittance after Formation of Overcoat Layer ($\Omega/\square$) | Heat resistance stability | Moist-heat resistance stability | Long-term heat resistance stability |
|---|---|---|---|---|---|---|---|---|---|---|---|---|---|
| Comparative Example 5 | 2 | 4.5 | 5.5 | 100 | good | $1.3 \times 10^3$ | $1.4 \times 10^3$ | $1.4 \times 10^3$ | 12 | $1.4 \times 10^3$ | 1.0 | 0.9 | N.D. |
| Comparative Example 6 | 1 | 4.0 | 62 | - | good | $4.0 \times 10^2$ | $4.6 \times 10^2$ | $4.6 \times 10^2$ | 80 | $4.6 \times 10^2$ | 1.5 | 1.5 | 1.0 |

[XPS Measurement Sample 1]

On the substrate on which an undercoat layer was formed in [Undercoat Layer Formation Example 2], a coating solution adjusted to contain 0.06% by mass of the [carbon nanotube dispersion liquid 3] was coated using a #3 wire bar.

[XPS Measurement Sample 2]

A #188 U46 on which no undercoat layer was formed was subjected to the corona treatment performed in [Undercoat Layer Formation Example 4]. Further, on the resultant, a coating solution adjusted to contain 0.06% by mass of the [carbon nanotube dispersion liquid 3] was coated using a #20 wire bar. Here, the reason why the thickness of the carbon nanotube layer was increased by using a #20 wire bar as compared to the XPS Measurement Sample 1 was to prevent X-ray from penetrating into the PET substrate. By doing so, only the information relevant to the binding state of carbon in the carbon nanotube layer can be obtained.

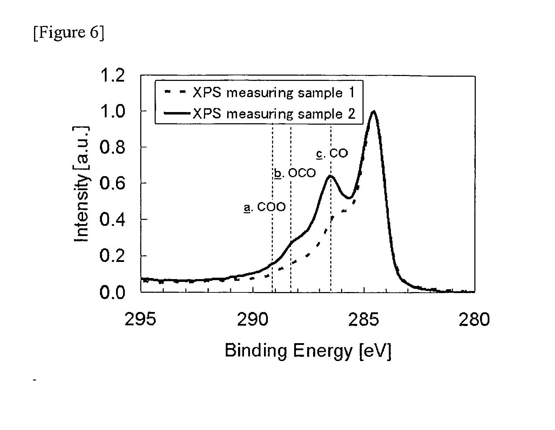

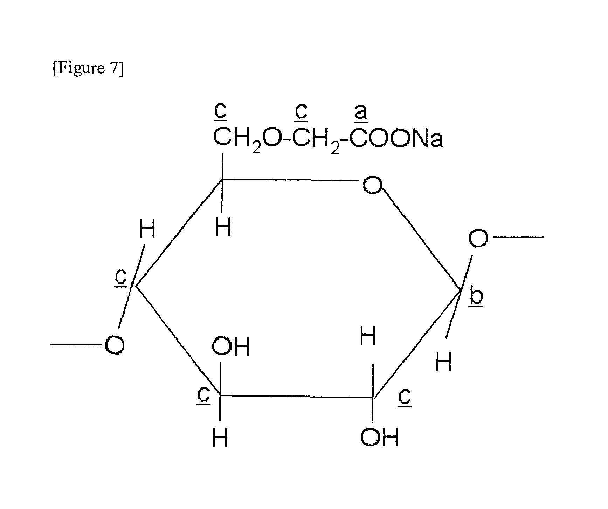

The surfaces of the [XPS Measurement Sample 1] and the [XPS Measurement Sample 2] were analyzed by XPS. The results thereof are shown in Fig. 6. From Fig. 6, it was found that the carbon bond peaks, which are attributed to carboxymethylcellulose in the outermost surface (see Fig. 7 for the binding state of carbon for each of "a", "b" and "c"), were higher for the [XPS Measurement Sample 2] as compared to the [XPS Measurement Sample 1]; and that, by providing an undercoat layer, there was a relative decrease in the amount of carboxymethylcellulose in the carbon nanotube layer.

In order to compare the amounts of carboxymethylcellulose more quantitatively, element composition ratios were derived from XPS data. The results thereof are shown in Table 3. Elemental silicon was observed in the XPS Measurement Sample 1 in which an undercoat layer was provided; however, in the XPS Measurement Sample 2 in which no undercoat layer was provided, elemental silicon was not observed. The XPS Measurement Sample 1 contains oxygen attributed to silicon oxide ($SiO_2$) in the undercoat layer. Table 4 shows the results obtained by subtracting this oxygen content, which are the elemental analysis results relating only to the respective carbon nanotube layers. It is believed that all of oxygen in Table 4 is contained in carboxymethylcellulose of the carbon nanotube layers; therefore, based on the amounts thereof, the amounts of carboxymethylcellulose in the carbon nanotube layers can be compared. From Table 5, it was found that the [XPS Measurement Sample 2] had a higher oxygen ratio and thus a greater amount of carboxymethylcellulose with respect to the carbon nanotube, as compared to the [XPS Measurement Sample 1].

[Table3]

| Elemental ratio (atomic%) | | | | | |
|---|---|---|---|---|---|
| | C | N | O | Na | Si |
| XPS measuring sample 1 | 72.6 | — | 23.1 | 1.2 | 3.1 |
| XPS measuring sample 2 | 70.2 | 0.8 | 26.5 | 2.5 | — |

[Table 4]

| Elemental ratio (atomic%) | | | | |
|---|---|---|---|---|
| | C | N | O | Na |
| XPS measuring sample 1 | 79.9 | — | 18.7 | 1.3 |
| XPS measuring sample 2 | 70.2 | 0.8 | 26.5 | 2.5 |

INDUSTRIAL APPLICABILITY

The transparent conductive laminate according to the present invention which has transparent conductivity, heat resistance stability and moist-heat resistance stability can be preferably used, for example, as an electrode related to displays such as touch screens, liquid crystal displays, organic electroluminescences and electric papers.

DESCRIPTION OF SYMBOLS

101: High-voltage application device
102: Electrode
103: Partition wall
104: Transparent substrate
201: White reflection plate
202: Adhesive layer
203: Transparent conductive laminate
204: Conductive layer
205: Transparent substrate
401: Polymer film
403: Roll-up type vapor deposition apparatus
404: Rolling chamber
405: Roll-out roller
406: Boat
407, 408, 409: Roll-out side guide roll
410: Cooling drum
411: Oxygen introduction nozzle
412: Plasma electrode
413, 414, 415: Roll-up side guide roll
416: Roll-up roller
501: Electric furnace
502: Quartz sintered plate
503: Reactor
504: Catalyst layer
505: Thermocouple
506: Waste gas pipe
507: Mass flow controller
508: Mixed gas introduction pipe

**Claims**

1. A transparent conductive laminate, which comprises a conductive layer containing a carbon nanotube on a transparent substrate, wherein at least one of the following conditions [A] to [C] is satisfied and the ratio of the surface resistance after subjecting said transparent conductive laminate to a 1-hour moist-heat treatment at a temperature of 60°C and a relative humidity of 90% and then leaving the resultant to stand for 3 minutes at a temperature of 25°C and a relative humidity of 50% is 0.7 to 1.3 with respect to the surface resistance prior to said treatment:

   [A] the surface resistance at a white reflectance of 75% is $1.1 \times 10^3$ $\Omega/\square$ or less;
   [B] the surface resistance at a light absorptivity of a carbon nanotube layer of 5% is $1.1 \times 10^3$ $\Omega/\square$ or less; and
   [C] the surface resistance at a total light transmittance of 90% is $1.1 \times 10^3$ $\Omega/\square$ or less.

2. The transparent conductive laminate according to claim 1, wherein the ratio of the surface resistance after subjecting said transparent conductive laminate to a 1-hour heat treatment at a temperature of 150°C and then leaving the resultant to stand for 24 hours at a temperature of 25°C and a relative humidity of 50% is 0.7 to 1.3 with respect to the surface resistance prior to said treatment.

3. The transparent conductive laminate according to claim 1 or 2, wherein the ratio of the surface resistance after subjecting said transparent conductive laminate to a 500-hour heat treatment at a temperature of 80°C and then leaving the resultant to stand for 3 minutes at a temperature of 25°C and a relative humidity of 50% is 0.7 to 1.3 with respect to the surface resistance prior to said treatment.

4. The transparent conductive laminate according to any one of claims 1 to 3, wherein an undercoat layer containing an inorganic oxide is arranged underneath said conductive layer.

5. The transparent conductive laminate according to claim 4, wherein said inorganic oxide contains alumina and/or silica as a main component(s).

6. The transparent conductive laminate according to claim 4, wherein said undercoat layer contains a complex of a silica microparticle and a polysilicate as a main component.

7. The transparent conductive laminate according to claim 6, wherein said silica microparticle has a diameter in the range of 10 nm to 200 nm.

8. A method of producing a transparent conductive laminate, which comprises the steps of: forming an undercoat layer on a transparent substrate, wherein a water contact angle of said undercoat layer is 5 to 25°; coating a carbon nanotube dispersion liquid containing a dispersant on said undercoat layer; and drying the resultant to remove a dispersion medium from said carbon nanotube dispersion liquid coated on said undercoat layer.

9. The method of producing a transparent conductive laminate according to claim 8, wherein said carbon nanotube dispersion liquid has a pH in the range of 5.5 to 11.

10. The method of producing a transparent conductive laminate according to claim 8 or 9, wherein, in said coating step and/or drying step, said dispersant is transferred from the carbon nanotube surface and/or said carbon nanotube dispersion liquid to said undercoat layer.

11. The method of producing a transparent conductive laminate according to any one of claims 8 to 10, wherein the mass ratio of said dispersant is 0.5 to 9 with respect to a carbon nanotube contained in said carbon nanotube dispersion liquid.

12. An electric paper, comprising the transparent conductive laminate according to any one of claims 1 to 7.

13. A touch screen, comprising the transparent conductive laminate according to any one of claims 1 to 7.

[Figure 1]

[Figure 2]

[Figure 3]

500.00 nm

1.00 x 1.00 µm

30.77
[nm]

0.00

[Figure 4]

[Figure 5]

[Figure 6]

[Figure 7]

<div style="text-align:center">**INTERNATIONAL SEARCH REPORT**</div>

| | International application No. |
|---|---|
| | PCT/JP2011/074944 |

**A. CLASSIFICATION OF SUBJECT MATTER**
*C01B31/02*(2006.01)i

According to International Patent Classification (IPC) or to both national classification and IPC

**B. FIELDS SEARCHED**

Minimum documentation searched (classification system followed by classification symbols)
C01B31/02

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
WPI, JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2009-295378 A  (Sony Corp.),<br>17 December 2009 (17.12.2009),<br>the entire specification<br>& US 2009/0305055 A1    & CN 101599316 A | 1-13 |
| A | JP 2008-177143 A  (Toray Industries, Inc.),<br>31 July 2008 (31.07.2008),<br>the entire specification<br>(Family: none) | 1-13 |
| A | JP 2009-242144 A  (Toray Industries, Inc.),<br>22 October 2009 (22.10.2009),<br>the entire specification<br>(Family: none) | 1-13 |

| [X] | Further documents are listed in the continuation of Box C. | [ ] | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>24 January, 2012 (24.01.12) | Date of mailing of the international search report<br>07 February, 2012 (07.02.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

<table>
<tr><td>International application No.</td></tr>
<tr><td>PCT/JP2011/074944</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-043237 A  (Korea Electro Technology Research Institute), 25 February 2010 (25.02.2010), the entire specification & US 2010/0040887 A1     & EP 2154598 A2 & DE 8166138 T          & KR 10-2010-0021237 A & CN 101650484 A | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009149516 A
- WO 2009107758 A
- JP 2010005817 A